# EUROPEAN PATENT APPLICATION

(11) **EP 2 273 469 A1**
(43) Date of publication of application: **12.01.2011**
(21) Application number: 09164897.2
(22) Date of filing: 08.07.2009
(51) Int. Cl.: G08G 1/123, G08B 25/01, B60R 21/015

(54) **Method for assessment, transfer and presentation human injury data after a vehicle accident**

(71) Applicant: Nederlandse Organisatie voor Toegepast -Natuurwetenschappelijk Onderzoek TNO, 2628 VK Delft (NL)
(72) Inventor: The designation of the inventor has not yet been filed
(74) Representative: Hatzmann, Martin

(57) **Abstract**

System for the assessment, transfer and presentation of data related to human injuries after a vehicle accident, comprising sensing means (3) for sensing data related to the vehicle and/or its equipment, called vehicle data; processing means (2) for assessing, based on the vehicle data, biomechanical and/or biomedical data related to one or more vehicle passengers, called passenger data; and transmission means (2, 4) for transmitting the passenger data to an emergency centre (5) when the vehicle data or the passenger data meet one or more predetermined conditions. The processing means (2) may be arranged to convert the passenger data into a preliminary medical advice, which is output to the one or more vehicle passengers. Moreover, the processing means (2) may be arranged to transmit geographic position data of the vehicle the emergency centre (5) and the emergency centre (5) may be arranged to transmit a message to one or more medical or paramedical workers (7) including the position data and passenger data.

## Description

The present invention refers to a method for the assessment, transfer and presentation of data related to human injuries after a vehicle accident.

In the recent years around 40.000 people were killed and more than 1.7 million injured in European road accidents. Although the number of road fatalities and injuries is declining over the years, greater efforts will have to be made if the European Commission's targets on reduction of road fatalities and injuries are to be met. The use of in-vehicle emergency call (eCall / Onstar) to deploy emergency assistance will save lives and reduce the social burden of road accidents by improving the notification of such accidents, speeding up the emergency service response and lowering the subsequent effects on fatalities, severity of injuries and traffic flows.

GM (USA) has been implementing the so-called Onstar (http://www.onstar.com) system in vehicles for several years. The EU is about to make a decision on implementing the so-called eCall system (http://ec.europa.eu/information_society/activities/intelligentcar) in all new vehicles that will be allowed on the EU roads. Both systems have the functionality of an emergency call either generated manually by vehicle passengers or automatically via activation of in-vehicle sensors when an accident occurs. When activated, the in-vehicle eCall system establishes a 112-voice connection direct to the relevant PSAP (Public Safety Answering Point), which is a public authority or a private eCall centre that operates under the regulation and/or authorization of a public body. At the same time, a minimum set of data (MSD) - including key information about the accident such as time, location and vehicle description - is sent to the PSAP operator receiving the voice call. Up to now the information that is send or is foreseen to be sent are details of the vehicle, the location, the number of passengers and the crash severity based on the deceleration levels measured by the airbag module.

One aim of the present invention is to automatically assess human injury data during or after a vehicle accident and to transfer those data to an emergency centre.

Another aim is to present such human injury data to the passenger(s) inside the crashed vehicle and/or to output a preliminary medical advice to the passenger(s) and/or bystanders/aiders.

Still another aim is to provide detailed information on the severity of injury of the passengers of a crashed vehicle to emergency rescuers and/or medical helpers to improve their work and to save lives.

Yet another aim is to inform first aiders in the neighbourhood of a car crash via e.g. SMS messages, informing those first aiders with location and assessed injury information and some form of preliminary medical advice.

According to the invention a method for the assessment, transfer and presentation of data related to human injuries after a vehicle accident is presented, preferably comprising next steps:
- sensing and/or collecting data related to the vehicle and/or its equipment, called vehicle data hereinafter;
- assessing, based on said vehicle data, biomechanical and/or biomedical data related to one or more vehicle passengers, called passenger data hereinafter;
- transmitting said passenger data to an emergency centre when the vehicle data or the passenger data meet one or more predetermined conditions.

Preferably, the passenger data are converted into a preliminary medical advice, which is output to said one or more vehicle passengers.

Additionally it is preferred that geographic position data of the vehicle are transmitted to the emergency centre. Besides, it may be preferred that the emergency centre transmits a message to one or more medical or paramedical workers or first aiders (in the neighbourhood of the vehicle accident) including said position data and passenger (injury) data.

The current invention makes a link between biomechanical knowledge and measured signals from the vehicle. It thus gives more information to the paramedics so that they will be better prepared to their work. Moreover it supports the passenger(s) to perform some self-help.

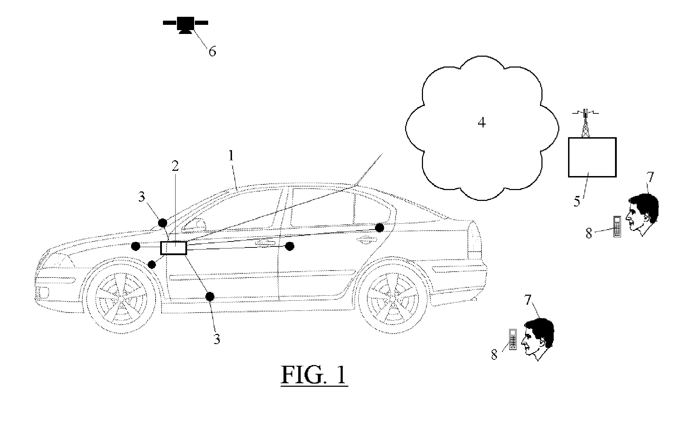

- Figure 1: shows an exemplary embodiment of a configuration for performing the method according to the invention.

Figure 1 shows a car 1 having a local control & processing module (CPM) 2 which is arranged to assess, transfer and present data related to human injuries after a vehicle accident comprising several kinds of sensors 3 for detecting several vehicle data, i.e. data related to the vehicle and/or its equipment, e.g. a vehicle accelerometer, passenger monitoring sensors, needed for the initial position of the passenger (e.g. the position of the seat, the weight (distribution) of the passenger and the position of the steering wheel), belt rollout sensors, belt acceleration sensors, etc. Those sensor based vehicle data may be supplemented with vehicle data gathered from the car computer(s) and/or a car data bus.

The CPM 2 is arranged for assessing, based on said vehicle data, passenger data, i.e. biomechanical and/or biomedical data related to one or more vehicle passengers. The CPM 2 includes one or more algorithms for computing data on the passenger kinematics and injury level, including a mathematical model of the passenger(s), consisting of bodies, springs, dampers and contact models. These model(s) can be different for different types of passengers, so e.g. five models can be developed such that each passenger is well matched to one of the models. The inputs for this model thus include:
- vehicle acceleration,
- belt force (this can be calculated from the rollout using lookup tables or possibly it is already known as such from a so-called Continuous Restraint Control system)
- belt rollout, measured by a sensor
- belt acceleration, measured by a sensor

Outputs are several injury parameters, such as chest acceleration, chest deflection, neck injury parameters and head acceleration signals.

Moreover, an observer model is included in the CPM 2, e.g. a Kalman filter, based on a representation of above mentioned model for estimating the actual injury parameters based on the detected vehicle data.

Finally, the CPM 2 comprises, e.g. eCall based, communication means for transmitting, via a wireless network 4, the passenger data, i.e. the injury information to the paramedics in an emergency centre 5. Besides, the injury information and thereby belonging self-help tips may be output to the passenger(s) inside the car via the car loudspeakers (not shown in figure 1).

The geographic position data of the crashed car, detected via a GPS system 6, may also -directly or indirectly- be transmitted to the emergency centre 5.

The emergency centre 5 may additionally transmit a message to medical or paramedical workers 7 including the position data and passenger (medical) data via their mobile terminals 8. Those (para)medical workers 7 may include professional and/or voluntary first aiders living or working in the neighbourhood of the crash. For instance, a message could be sent -e.g. via SMS- to first aiders registered in the emergency centre 5, who have a GPS enabled mobile telephone or PDA which keeps the emergency centre 5 informed of their actual geographical position. In that way the emergency centre 5 is able to call -via SMS- first aiders in the surroundings of the vehicle accident. Besides, (assessed) injury information could be transmitted to those first aiders via the SMS message.

Summarizing the actions of the configuration shown in figure 1, the measured vehicle deceleration and the measured seat belt rollout during the accident are input to the CPM. Next to the crash data, information on the weight of the passenger and the seating position before the start of the crash are input to the CPM. This CPM uses a multibody based model of the vehicle and the passenger(s). This model determines in real time the passenger loading like chest acceleration, chest deflection, and neck loading. These signals are then used to calculate general injury criteria which are used throughout safety system research and development like viscous criterion, chest compression. Kalman filtering techniques are used to reduce model errors. The output of the CPM is an injury indicator like the Abbreviated Injury Severity indicator for e.g. the chest, neck and/or head area and an estimate of the reliability of the data. This information is made available for an eCall kind of application.

## Claims

1. Method for the assessment, transfer and presentation of data related to human injuries after a vehicle accident, the method comprising next steps:
- sensing and/or collecting data related to the vehicle and/or its equipment, called vehicle data hereinafter;
- assessing, based on said vehicle data, biomechanical and/or biomedical data related to one or more vehicle passengers, called passenger data hereinafter;
- transmitting said passenger data to an emergency centre when the vehicle data or the passenger data meet one or more predetermined conditions.

2. Method according to any preceding claim, wherein the passenger data are converted into a preliminary medical advice, which is output to said one or more vehicle passengers.

3. Method according to any preceding claim, wherein geographic position data of the vehicle are transmitted to the emergency centre.

4. Method according to claim 3, wherein the emergency centre transmits a message to one or more medical or paramedical workers including the position data and passenger data of the relevant vehicle.

5. Method according to claim 4, wherein said one or more medical or paramedical workers are enabled to inform the emergency centre of their geographical positions and wherein the emergency centre transmits a message, e.g. an SMS message, including said position data and passenger data of the relevant vehicle, to one or more medical or paramedical workers in the neighbourhood of that vehicle.

6. System for the assessment, transfer and presentation of data related to human injuries after a vehicle accident, comprising
- sensing means (3) for sensing data related to the vehicle and/or its equipment, called vehicle data hereinafter;
- processing means (2) for assessing, based on said vehicle data, biomechanical and/or biomedical data related to one or more vehicle passengers, called passenger data hereinafter;
- transmission means (2, 4) for transmitting said passenger data to an emergency centre (5) when the vehicle data or the passenger data meet one or more predetermined conditions.

7. System according claim 6, wherein said processing means (2) are arranged to convert the passenger data into a preliminary medical advice, which is output to said one or more vehicle passengers and/or bystanders/aiders.

8. System according to claim 6 or 7, wherein said processing means (2) are arranged to transmit geographic position data of the vehicle to the emergency centre (5).

9. System according to claim 8, wherein the emergency centre (5) is arranged to transmit a message to one or more medical or paramedical workers or first aiders (7) including said position data and passenger data of the relevant vehicle.

10. System according to claim 9, comprising means which are arranged to provide the emergency centre with the geographical positions of said one or more medical or paramedical workers or first aiders and wherein the emergency centre is arranged to transmit a message, e.g. an SMS message, including said position data and passenger data of the relevant vehicle, to one or more medical or paramedical workers in the neighbourhood of that vehicle.
